(19) Europäisches Patentamt
European Patent Office
Office européen des brevets

(11) Publication number: 0 268 628 B1

(12) EUROPEAN PATENT SPECIFICATION

(45) Date of publication of patent specification: 11.11.92 (51) Int. Cl.5: G01C 21/22

(21) Application number: 87903355.3

(22) Date of filing: 15.05.87

(86) International application number:
PCT/GB87/00338

(87) International publication number:
WO 87/07013 (19.11.87 87/25)

# (54) NAVIGATION AIDS.

(30) Priority: 16.05.86 GB 8612002
04.07.86 GB 8616401

(43) Date of publication of application:
01.06.88 Bulletin 88/22

(45) Publication of the grant of the patent:
11.11.92 Bulletin 92/46

(84) Designated Contracting States:
AT BE CH DE FR GB IT LI LU NL SE

(56) References cited:
DE-A- 3 303 462
FR-A- 2 291 479
GB-A- 2 043 909
GB-A- 2 068 546

(73) Proprietor: OUDOS S.A
6, rue Heine
L-Luxembourg(LU)

(72) Inventor: AGNEW, Hugh, John
1st Floor 15 Altona Street
West Perth, W.A. 6005(AU)
Inventor: WOOLLEY, Roger, Kenneth
46 Paterson Road
Kelmscott, W.A. 6111(AU)
Inventor: PARFITT, Gwyn, David, Walter
Flat E, 6th Floor Golden Plaza
747 Nathan Road Kowloon(HK)

(74) Representative: Musker, David Charles et al
Beresford & Co 2-5 Warwick Court High Holborn
London WC1R 5DJ(GB)

EP 0 268 628 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention is concerned with facilitating the plotting of points on a map or navigational chart and with taking data off a chart.

Traditionally, positions are plotted on a chart by drawing intersecting position lines determined from observations, measurements and/or calculations, and further positions can be plotted using the dead-reckoning or estimated position methods involving calculations of speed, course, set and drift. The further positions and bearings can then be read-off the chart using instruments and the charts scale and compass markings. Such methods are time consuming and laborious, and requires a degree of expertise with navigational drawing instruments such as a parallel-ruler and dividers or other manual mechanical chart plotting and reading aids.

A very expensive partial replacement for the traditional plotting method is provided by a plotting table which receives an input or inputs from one or more external navigation aids and projects a light beam onto or draws a line at the corresponding location on the chart. In addition to being expensive, such equipment takes up a substantial amount of space and is heavy, and is therefore not particularly suited to anything but large ships.

Electronic chart systems are also being developed to assist in navigation. These have the disadvantages of high cost, the requirement of a cathode ray tube as the chart display, a lack of high resolution in the displayed output, and the lack of a permanent paper record of the output.

A basic navigation aid is described in British Patent Application No. GB 2043909A. In that known aid, a digitising table is employed, on which a chart is placed. A cursor cooperating with the table is movable over the chart and provides a signal which is decoded to give the coordinates in latitude and longitude of the cursor position relative to the chart. The actual position in latitude and longitude of the vehicle being navigated is known from a signal provided by a navigation computer. The actual position signal and the cursor position signals are compared, and an indication is provided by means of lamps on the cursor as to the direction (up, down, right or left) in which the cursor should be moved in order that the cursor and actual positions coincide.

Thus, this known arrangement simply provides a position plotting device, and relies on a signal indicating the actual position of the vehicle.

The present invention seeks to provide a navigation aid which includes certain improvements in data inputting to the basic aid described in GB-A-2043909.

GB-A-1523618 describes a position indicating apparatus in which one or two way-points can be memorised, and then information is supplied to an automatic pilot to guide the aircraft to the first way-point and then, if so desired, to the second way-point.

In accordance with the present invention, there is provided a navigational aid comprising:
a charting surface;

means for storing a first chart-based signal indicative of a predetermined position on a chart on said charting surface in terms of a co-ordinate system ($\theta,\phi$) in the chart;

a cursor device movable by a user over the chart on the surface;

means to provide a signal indicative of the current position of the cursor device in terms of a co-ordinate system of the charting surface;

means to convert the current cursor position signal to a second chart-based signal indicative of the current position of the cursor device in terms of the co-ordinate system of the chart; and

means for processing said first and second chart-based signals;

characterised in that said storage means is arranged to store a plurality of said first chart based signals indicative of a plurality of predetermined positions;and

said storage means comprises means responsive to a user instruction, to sense the cursor device position and provide a said first chart based signal to be stored, so as to enable said predetermined positions to be defined by the cursor device; and in that

the processing means is adapted to perform a plurality of different navigational calculations in dependence upon said second and at least one said first chart based signal; and there are provided

display means for providing a visible displayed output of the results of said calculation in terms of units derivable from the chart co-ordinate system.

Thus a plurality of stored positions defining, for example, a course may be conveniently entered by placing the cursor device on corresponding positions, and a number of useful navigational calculations performed and the results thereof displayed (preferably on the cursor device); and thus, the aid provides a readily visible read-out of data in meaningful units.

Preferably, the processing means is operable to calculate from the stored chart-based signal and the current chart-based signal the distance and bearing of the current position from the stored position and/or vice versa, the display means comprising means to display the distance and bearing. With this feature, given the bearings of one's current position from two landmarks, or one's bearing and distance from a single landmark, it is a simple matter to plot one's current position on the chart.

Preferably, the processing means is operable to calculate from the current chart-based signal and from a first and second of such stored chart-based signals the distances of the current position along and off a course from the first to second stored positions, the indicating means comprising means to display the distances along and off course. With this feature a number of waypoints may be stored and one's progress along the planned course can be displayed.

The aid may further comprise means to reference the chart coordinate system with respect to the surface coordinate system in dependence upon the positions of at least two points on the surface and the coordinates of those positions in terms of the chart coordinate system, the converting means being responsive to the referencing means to provide the conversion. Thus, the chart may be placed on the charting surface in an arbitrary position and yet, after referencing, the position of the cursor can be determined in terms of the chart coordinate system (for example longitude and latitude).

In one arrangement, the referencing means may include means to input manually the coordinates of said positions in terms of the chart coordinate system. In order to avoid the necessity for entering the coordinates every time a particular chart is re-used, the aid may further include means to store for each of a plurality of charts the coordinates of reference points marked on the respective chart, means to retrieve the stored coordinates for a selected one of charts, and means to re-reference the selected chart in dependence upon the retrieved coordinates and the positions of the marked reference points on the charting surface.

In an alternative arrangement the chart may have marked reference points and coded information (such as a bar code) of the coordinates of the marked reference points, the aid further including means to read the coded information. Thus, there is no need to manually enter the coordinates of referencing points on the chart.

The display may be capable of displaying for example, the current cursor position, in which case the coordinates of any location on the chart can be read out in, for example, terms of latitude and longitude.

Although it is useful to provide, in a digitising table/cursor arrangement, a keypad on the cursor for entering data, mis-keying of data can be a problem. Preferably, with the aid according to the invention, the data to be entered is variable from an initial value prior to entry in dependence upon movement of the cursor device with respect to the charting surface. Preferably, the aid also includes means to display the data on the cursor device. Thus, the data which is about to be entered can be readily viewed and can be "ramped" up and down prior to entry by movement of the cursor device.

Other preferred features of the invention will be apparent from the claims and from the following specific description, given by way of example, of an embodiment of the invention with reference to the drawings.

Figure 1 is a schematic perspective view of a navigation aid;

Figure 2 is a plan view of the cursor of the navigation aid;

Figure 3 is a block diagram of the circuitry of the aid;

Figure 4 is a flow diagram showing how the chart is referenced;

Figure 5 is a flow diagram concerning the current cursor position display;

Figure 6 is a flow diagram concerning direction indication; and

Figure 7 shows the distances along and off the course between two way-points.

## Construction

Referring to Figure 1, the navigation aid comprises a digitising table 10 and a cursor or mouse 12 connected to the table 10 via a signal line 14. By means of a sensor coil in the cursor and a grid of wires beneath the surface of the table, it is possible to determine the position in terms of x and y co-ordinates of the cursor on the table. A chart 16 is spread across the table 10 approximately squarely on the table, and the cursor is freely movable by hand across the chart.

Referring to Figure 2, the cursor 12 has an elongate housing 18 formed with a through-hole 20 at one end. A transparent disc 22 is fitted across the base of the through-hole and is marked with cross-hair lines 24, 26. A hole 28 is formed through the disc 22 at the intersection of the cross-hair lines 24, 26 so that a pencil can be used to mark the chart through the hole 28 at the intersection of the lines 24, 26. The sensor coil is mounted in the housing around the hole 20 so that the determined position of the cursor 12 corresponds to the position of the hole 28.

Four LED indicators 30 to 36 designated "North", "East", "South" and "West", respectively, are arranged around the hole 20, and a further LED indicator 40 designated "On Target" and a "fine" push button 42 are disposed adjacent the hole 20.

At the other end of the housing 18, there is a keypad 44, and in between the keypad and hole 20, there are four LCD displays 46 to 52 designated "Cursor Position", "Fixed Point", "Other Data", and "Data Entry", respectively.

Referring to Figure 3, the cursor 12 contains within its housing a central processor unit (CPU) 54 with associated read only memory (ROM) 56 storing the operating program of the cursor and random access memory (RAM) 58 for storing data. The CPU 54 drives the LED displays 30-40 and the LCD displays 46-52 via a display interface 60. The CPU 54 also receives signals from the keyboard 44 and push-buttons 42 via a keyboard interface 62. The sensor coil 64 in the cursor and the digitising table 10 supply signals to a position interface 66, which can then supply position signals in terms of x, y co-ordinates of the position of the cursor 12 on the table 10 to the CPU 54. The CPU also receives a clock signal from a clock circuit 67. Lastly, the CPU can receive external information signals via an external interface 68.

There now follows a description of the operation of the navigation aid.

## Referencing

Before the aid can be used for plotting and reading off points on the chart, the chart 16 must firstly be referenced with respect to the digitising table. The detail of the referencing operation is shown in the flow diagram of Figure 4 from which it can be seen that three points of known latitude and longitude, as shown in Figure 1, are chosen, and for each the cursor 12 is positioned at that point and the position is entered via the keyboard, for example in the form (degrees latitude), N or S, (degrees longitude), E or W, REF. As the data is entered, it is displayed on the data entry display 52. The entered data for each point is stored, as too is the sensed position of the cursor 12 on the table 10. Once all three reference points have been entered, the CPU 54 sets up a mathematical mapping system of cursor position onto latitude and longitude.

## Current Cursor Position Display

Once the mapping system has been set up, the current cursor position can be displayed on the display 46 by performing the steps shown in Figure 5. The CPU 54 regularly and frequently performs these steps and thus the display 46 is continually updated. The display may take a form such as CP: (degrees latitude) N or S: (degrees longitude) E or W .

## Setting a Fixed Point

A fixed point may be set by entering its position via the keyboard in the form (degrees latitude), N or S, (degrees longitude), E or W, FIXED POINT. As the position is entered it is displayed on the data entry display 52 and once it has been entered it is displayed on the fixed point display 48 in a similar form to the current position display and is also stored in the RAM 58.

Another way to enter a fixed point is to position the cursor on the required point on the chart and then enter FIXED POINT on the keyboard 44 without any prior data. The fixed point position is then set equal to the current cursor position and is stored in the RAM 58.

## Moving to the Fixed Point

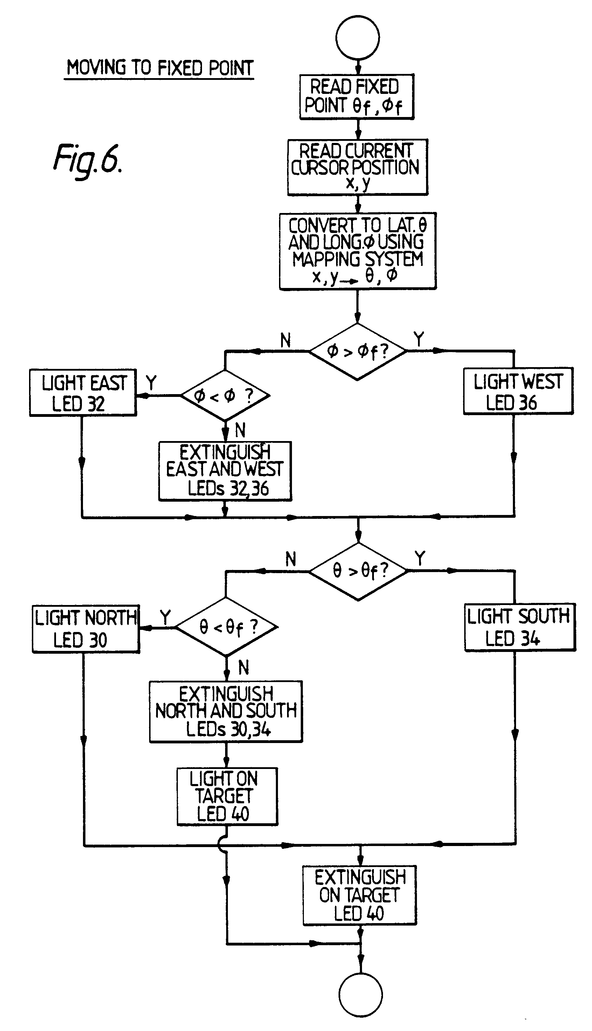

Once the fixed point has been set, the MPU 54 performs the routine set out in Figure 6 in controlling the LED displays 30 to 40. This routine is performed regularly and frequently to provide a continually updated display by the LED displays 30 to 40. It will be appreciated from Figure 6 that the LED's indicate whether the cursor 12 should be moved North or South and East or West to reach the fixed position, and once that position is reached, the On Target LED 40 is lit.

In a modification of the routine of Figure 6, the LED's 30 to 36 are flashed at a rate which increases as the distance of the cursor 12 from the fixed point decreases, and once the cursor is nearly on target the fine button 42 can be depressed to decrease the flashing rate by a predetermined factor.

## Display of Other Data

The Other Data display 50 is capable of displaying the following forms of other data when operating in different modes and can be advanced from one mode to the next cyclicly using the CONTROL key of the keyboard:

1. Blank Display
2. (Distance in nautical miles) NM: (Bearing to fixed point in degrees) DEG TO
3. (Distance in nautical miles) NM: (Bearing from fixed point in degrees) DEG FROM
4. (Bearing in degrees) CRS: (Speed in knots) KN
5. DR:(latitude in degrees) N or S: (longitude in degrees) E or W
6. SET (bearing in degrees) DEG: DR (rate in knots) KN
7. EP: (latitude in degrees) N or S: (longitude in degrees) E or W
8. TIME: (hours): (minutes): (seconds)
9. WP1: (latitude in degrees) N or S: (longitude in degrees) E or W
10. WP2:(latitude in degrees) N or S: (longitude in degrees) E or W
11. 1 to 2: (distance nautical miles) ALONG: (distance in nautical miles) OFF
12. WP3: (latitude in degrees) N or S: (longitude in degrees) E or W
13. 2 to 3 (distance in nautical miles) ALONG: (distance in nautical miles OFF)

14. WP4: (latitude in degrees) N or S: (longitude in degrees) E or W
15. 3 to 4 (distance in nautical miles) ALONG: (distance in nautical miles) OFF

Mode 2: Distance and Bearing to Fixed Point

The CPU 5 is programmed to be able to calculate, from the latitude and longitude of the current cursor position and the fixed point, the distance between them and the bearing from True North of the fixed point from the cursor position. The distance and bearing are displayed on the Other Data display 50 in the form set out above and are continually updated as the cursor is moved.

Thus, if bearings are taken from a boat of two landmarks of known position, they can successively be used as fixed points and the cursor can be used to plot on the chart two further points with appropriate bearings to the respective fixed points. The intersection of lines connecting each fixed point and the respective further point is then a plot of the current position of the boat.

Mode 3: Distance and Bearing from Fixed Point

This mode is similar to Mode 2, except that the calculated bearing is from, rather than to, the fixed point and thus differs from the bearing of Mode 2 by 180 degrees.

Mode 4: Current Course and Speed

The cursor may be connected to a digital compass and speed-sensor, via the external interface, and in Mode 4 a display is made of the course and speed in the form (bearing in degrees) CRS, (speed in knots). KN. The course and speed signals are used in calculations of positions as described below with reference to Modes 5 and 7.

In this mode the signals from the external interface may be overridden by manually entering a course and speed via the keyboard in the form (course in degrees), COURSE, (speed in knots), SPEED; and such override can be released by entering null data in the form COURSE, SPEED.

Mode 5: Dead-Reckoning Position

In this mode, or mode 7 described below, a datum dead-reckoning or estimated position may be entered in the same way as for entering a fixed point, but by pressing D.R. & E.P. RESET rather than FIXED POINT. Thereafter from the data provided in Mode 4, and with reference to the clock 67, the CPU 54 continually calculates a current dead-reckoning position which is displayed in Mode 5 in terms of latitude and longitude on the Other Data display 50. Furthermore, when in Mode 5, the routine of Figure 6 for controlling the LED's 30 to 40 is responsive to the latitude and longitude of the calculated dead-reckoning position, rather than of the fixed point, and thus the cursor 12 can be quickly located at the dead-reckoning position on the chart and that position can be plotted.

Mode 6: Set and Drift of Current

In this mode, a display is made of a set and drift which has been entered via the keyboard in the form (set in degrees), SET, (drift in knots), DRIFT. When this data is entered, it is stored for use in calculating an estimated position.

Mode 7: Estimated Position

In addition to calculating a current dead-reckoning position as described above under Mode 5, the CPU 54 similarly calculates a current estimated position which takes into account the set and drift entered as described above under Mode 6, and in Mode 7, the estimated position is displayed. When in Mode 7, the routine of Figure 6 is responsive to the latitude and longitude of the estimated position, rather than of the fixed point.

Mode 8: Time

In this mode, the current time is displayed on the Other Data display 50. The time can be set when in this mode by entering a time via the keyboard 44 in the form (hours). (minutes). (seconds).

Modes 9, 10, 12 and 14: Way-Points Entry and Display

In each of these modes the latitude and longitude of a respective way-point 1, 2, 3 or 4 can be entered via the keypad in the form (latitude of way-point), N or S, (longitude of way-point), E or W, WAY POINT; and once entered the position of the way-point is stored in the RAM 58 in terms of latitude and longitude and is displayed on the Other Data display 50. Alternatively, a way-point cab be set by positioning the cursor 12 at the desired point on the chart and depressing the WAY POINT key without any prior data entry.

When the cursor is operating in mode 9, 10, 12 or 14, the routine of Figure 6 is responsive to the latitude and longitude of the respective way-point WP1, WP2, WP3 or WP4, rather than of the fixed point, and thus the LED's 30 to 40 can be used quickly to position the cursor 12 at the way-point on the chart.

The way-points remain in memory even if the cursor is re-referenced. Therefore, the latitudes and longitudes of a series of way-points can be set using a small scale chart, and the cursor can then be re-referenced a number of times for a series of large scale chart and the way-points can be plotted on the large scale charts.

Modes 11, 13 and 15: Distance Along and Off Course

In modes 11, 13 and 15, the CPU 54 calculates the distances (as represented in Figure 7) in nautical miles of the current cursor position along and off a course between a respective pair of way-points WP1 and WP2, WP2 and WP3, and WP3 and WP4, and two distances are displayed on the Other Data display 50.

The way-points need not necessarily be within the boundary of the chart 16 on the table 10, and the boundary may be as represented by the dot-dash line 70 in Figure 7.

Whilst the facility to store only four way-points has been described above for the sake of brevity, it will be appreciated that a greater number than that may be provided.

Entering Data by Cursor Movement

Data entry via the keyboard 44, especially when several digits are to be entered, can be tedious and can possibly introduce errors due to mis-keying. As an alternative to data entry in this manner, the CPU 54 is also responsive to movement of the cursor in the x direction of the table 10 as a means of varying data prior to entry. Thus, once the chart 16 has been referenced on the table 10, initial latitude and longitude values are taken to be equal to the latitude and longitude of the current cursor position and initial values of other sorts are taken to be zero. Then, the values can, in turn, be ramped up and down by movement of the cursor 12 in the left and right directions, respectively, across the table. As an example, in order to set way-point 1 off the chart: (i) the cursor is placed on the table; (ii) Mode 9 is selected and the Data Entry display 52 displays the current cursor position; (iii) the displayed latitude is then increased or decreased by moving the cursor 12 to the right or left; (iv) if it is desired to increase/decrease the value above/below that obtained when the cursor has been moved to the right/left edge of the table, then the cursor is lifted clear of the table and replaced at the left/right edge; (v) once the displayed latitude value is approximately equal to that which it is desired to enter, the FINE key 42 is depressed to make the change in displayed value less sensitive to cursor movement, and the value is finely adjusted; (vi) the N or S key is then depressed to enter the selected latitude value; (vii) steps (iii) to (v) are then repeated for the longitude value; and lastly (viii) the E or W key is depressed to enter the selected longitude value. Despite the length of this paragraph, after a small amount of practice by the user, this method of data entry can be surprisingly quick except when large changes need to be made to the values.

Bearings and speeds can be entered similarly.

Calculator

It will be noted from Figure 2 that the keyboard 44 includes the basic function keys of a calculator, i.e. plus, minus, times, divided by and equals. These keys, in combination with the digit and decimal keys can be used for simple calculations during manual data entry and also for calculations unrelated to the other uses of the cursor.

Bearing Datum

Bearings may be entered and displayed with reference to True North. However, if it is desired to enter and display bearings with respect to some other datum, the difference between True North and the datum may be entered in the following form (bearing offset in degrees), E or W, BEARING OFFSET, and is then stored in the RAM 58. The keypad of the cursor then expects to receive entered bearings with reference to that other datum and converts such entered bearings to being True North referenced before storing them or using them in calculations. Any bearing which is to be displayed is converted to being with reference to that other datum rather than True North before it is displayed. Thus, the local variation of Magnetic North from True North, or the local convergence of Grid North and True North, together with any compass deviation (or error) may be entered as the bearing offset, and then bearings with reference to Magnetic North or Grid North, as the case may be, can be entered and will be displayed.

Modifications

In a development of the referencing system, each chart is provided with a code; three reference points are marked on the chart; and the navigation aid has in memory the latitudes and longitudes of the reference points for each coded chart. Thus, the code can be entered, manually or by means of a bar code and reader, and the cursor placed on the three reference points, whereupon the CPU can set up the mapping system.

The cursor may be adapted for operation with other forms of digitising table for example employing acoustic or optical sensors. Alternatively, the cursor may be connected to a chart table using a pantograph-type pivoted linkage having a pair of potentiometers operably connected at a pair of the linkage pivots such that the position of the cursor can be determined from the potentiometers.

As a modification to the type of digitising table having a grid of wires beneath its surface, the wires may be provided in a flexible sheet which can be spread over a surface, with the chart being spread over or under the flexible sheet. Thus the flexible sheet can be rolled up and stored when not in use. Furthermore, specially adapted charts may be used which have the digitising wires embedded in the thickness of the chart.

The cursor may be adapted to be able to display latitudes and longitudes selectably in (i) degrees and decimal degrees, (ii) degrees, minutes and decimal minutes, and (iii) degrees, minutes and seconds, or indeed in units of other chart co-ordinate systems.

The LED direction displays 30 - 36 and the transparent disc 22 may be formed as an assembly which is mounted for limited rotation of, for example, 30 degrees either way from the position shown in Figure 2 so that the cursor may be used at a slight angle to that shown in Figure 1 in order to suit right or left-handed use.

A different number of LED direction indicators may be used, for example sixteen, or alternatively a completely different form of direction indication may be provided as, for example, by a rotatable needle.

Instead of it being necessary to enter a local magnetic variation in order that the cursor can receive and display bearings with reference to Magnetic North, the cursor may be adapted to store magnetic variations for a series of positions at different latitudes and longitudes and to use the current cursor position to interpolate between the stored values in producing an estimated current magnetic variation which is used automatically in converting between True North and Magnetic North referenced bearings.

In addition to being able to calculate dead-reckoning and estimate positions, the cursor may also be adpated to as to be able to calculate, from given values for any six of the following seven parameters, the value of the remaining parameter: (i) Start Position; (ii) Finish Position; (iii) Course; (iv) Speed; (v) Elapsed time; (vi) Set; and (vii) Drift.

In a further modification the cursor may be adapted to store tidal stream tables for at least part of the Earth's waters, and the cursor then interpolates from those tables in producing estimated values of local set and drift. The cursor may also be adapted to store the Almanac of astronomical information so that information can be provided by the cursor to assist the user in astronomical observations and calculations.

The cursor may be provided with releasable suckers or some other means of releasably holding the cursor in position on the chart so that when used on, for example, a vessel, the cursor can be fixed to the chart during bad weather to prevent it falling off the table.

Furthermore, the cursor may be linked to the table by a mechanism such as that used for parallel-motion drawing boards so that the cursor is more easily movable in the x and y directions of the table but can be moved with more resistance in other directions across the table.

The external interface 6 described above may be bi-directional so that the cursor can output data, for example stored way-point positions, to other equipment.

Additionally, the directing means may be located other than on the cursor device. For example, the directing means may be provided on the charting surface.

The directing means may comprise indicator means, e.g. indicator lights or loudspeakers, disposed at or near the edges, for example mid-way along the edges, of the charting surface, or a block of indicator lights or one or more arrows disposed on or near the charting surface, for example in a corner thereof. The indication may vary in accordance with the distance to be moved.

Alternatively, a spoken indication may be provided, for example by using a voice chip and loudspeaker associated with the charting surface, which is operable to give spoken directions such as "north", "south", "east", "west" and "on target". The frequency or some other characteristic of the voice may change in accordance with the distance to be moved.

## Claims

**1.** A navigational aid comprising:

a charting surface (10);

means (58,54) for storing a first chart-based signal indicative of a predetermined position on a chart on said charting surface in terms of the co-ordinate system ($\theta,\phi$) of the chart;

a cursor device (16) movable by a user over the chart on the surface (10);

means (10, 64, 66) to provide a signal indicative of the current position of the cursor device (16) in terms of a co-ordinate system (x, y) of the charting surface (10);

means (54-58) to convert the current cursor position signal to a second chart-based signal indicative of the current position of the cursor device (16) in terms of the co-ordinate

system ($\theta,\phi$) of the chart; and

means (54-58) for processing said first and second chart- based signals;

characterised in that said storage means (58,54) is arranged to store a plurality of said first chart based signals indicative of a plurality of predetermined positions;and

said storage means (58, 54) comprises means responsive to a user instruction, to sense the cursor device position and provide a said first chart based signal to be stored, so as to enable said predetermined positions to be defined by the cursor device (16); and in that

the processing means is adapted to perform a plurality of different navigational calculations in dependence upon said second and at least one of said first chart based signals; and there are provided

display means for providing a visible displayed output of the results of said calculation in terms of units derivable from the chart coordinate system $\theta,\phi$.

**2.** An aid as claimed in claim 1, wherein the processing means is operable to calculate from the first chart-based signal and the second chart-based signal the distance and bearing of the current position from the stored position and/or vice versa, the display means (50,60) being arranged to display the distance and bearing.

**3.** An aid as claimed in claim 1, further comprising direction indicating means (30-36) responsive to the second and first chart based signals to indicate a direction from said current position to the predetermined position corresponding to said first signal, wherein the indication of the required direction is provided substantially instantaneously and is repeatedly updated.

**4.** An aid as claimed in claim 1 or 3, wherein the indication is provided by indicators arranged in two directions at right angles to each other.

**5.** An aid as claimed in claim 1, wherein the processing means is operable to calculate from the second chart-based signal and from two of such stored first chart-based signals the distances of the current position along and off a course from one stored position to the other, the display means comprising means (50,60) to display the distances along and off course.

**6.** An aid as claimed in any preceding claim, further comprising means (54,56,58,44 REF) to reference the chart coordinate system with respect to the surface coordinate system in dependence upon the positions ($x_n,x_n$) of at least two points on the surface and the coordinates $\theta_n,\phi_n$ of those positions in terms of the chart coordinate system, the converting means being responsive to the referencing means to provide the conversion.

**7.** An aid as claimed in claim 6, wherein the referencing means includes means to input manually the coordinates of said positions in terms of the chart coordinate system.

**8.** An aid as claimed in claim 6, further comprising means (56,58) to store for each of a plurality of charts the coordinates of reference points marked on the respective chart, means to retrieve the stored coordinates for a selected one of charts, and means to re-reference the selected chart in dependence upon the retrieved coordinates and the positions of the marked reference points on the charting surface.

**9.** An aid as claimed in claim 6, for use with a chart having marked reference points and coded information of the coordinates of the marked reference points, further comprising means to read the coded information.

**10.** An aid as claimed in any preceding claim, further comprising means (46,50) to display the current cursor position.

**11.** An aid as claimed in any preceding claim, further comprising means (48,50,60) to display the or each stored position.

**12.** An aid as claimed in any preceding claim, further comprising means (44) for manually entering data via the cursor device; the data to be entered being variable prior to entry in dependence upon movement of the cursor device (16) with respect to the charting surface.

**13.** An aid as claimed in any preceding claim, wherein the display means is arranged to display the indication on the cursor device (16).

**14.** An aid as claimed in any preceding claim, further comprising means (68) to transmit the second chart-based position signal to an external apparatus.

**15.** An aid as claimed in any preceding claim, and further comprising manual data entry means (44) to enter a position in terms of the chart coordinate system.

**16.** An aid as claimed in any preceding claim, and further comprising means (68) to receive an input data signal indicative of a position in terms of the chart coordinate system and to store the input signal for further processing by the processing means.

**17.** An aid as claimed in any preceding claim, and further including a clock means (67), and means responsive to the clock means, to speed and course signals, and to a defined position signal to determine and display an updated position.

**18.** An aid as claimed in claim 17, and further comprising manual data entry means to enter the speed and course.

**19.** An aid as claimed in claim 17 or 18, and comprising input means (68) to receive signals indicative of the speed and course.

**20.** An aid as claimed in any of claims 17 to 19, further comprising manual data entry means to enter corrections to the speed and course, the updated position taking into account the corrections.

**21.** An aid as claimed in any of claims 12, 15, 18 and 20, wherein the data entry means is provided on or by the cursor device (16).

**22.** An aid as claimed in claim 2, and further comprising means (56,58) to store a bearing offset, the bearing display means displaying the sum or difference of the determined bearing and the offset.

**Patentansprüche**

**1.** Navigationshilfe mit:
- einer Kartenauflagefläche (10);
- einer Einrichtung (58, 54) zum Speichern eines ersten kartengestützten Signals, das eine vorgegebene Position auf einer Karte auf der Kartenauflagefläche, ausgedrückt durch das Koordinatensystem ($\theta$, $\phi$) der Karte, anzeigt;
- einer Kursorvorrichtung (16), die von einem Benutzer über die Karte auf der Auflagefläche (10) bewegt werden kann;
- einer Einrichtung (10, 64, 66) zum Ausgeben eines Signals, das die aktuelle Position der Kursorvorrichtung (16), ausgedrückt durch ein Koordinatensystem (x, y) der Kartenauflagefläche (10), anzeigt;
- einer Einrichtung (54, 58) zum Umwandeln des Signals für die aktuelle Kursorposition in ein zweites kartengestütztes Signal, das die aktuelle Position der Kursorvorrichtung (16), ausgedrückt durch das Koordinatensystem ($\theta$, $\phi$) der Karte, anzeigt; und
- einer Einrichtung (54 - 58) zum Verarbeiten des ersten und des zweiten kartengestützten Signals;

**dadurch gekennzeichnet,** daß
- die Speichereinrichtung (58, 54) so ausgebildet ist, daß sie mehrere erste kartengestützte Signale speichert, die mehrere vorbestimmte Positionen anzeigen, und
- die Speichereinrichtung (58, 54) eine Einrichtung aufweist, die auf einen Nutzerbefehl anspricht, um die Position der Kursorvorrichtung zu erfassen und ein erstes zu speicherndes kartengestütztes Signal zu liefern, um es zu ermöglichen, daß die vorbestimmten Positionen durch die Kursorvorrichtung (16) festgelegt werden; und daß
- die Verarbeitungseinrichtung so ausgebildet ist, daß sie mehrere verschiedene Navigationsberechnungen, gestützt auf das zweite und mindestens eines der ersten kartengestützten Signale ausführt; und daß
- eine Anzeigeeinrichtung vorhanden ist, um eine sichtbare Ausgabeanzeige der Ergebnisse der Berechnung, ausgedrückt in Einheiten anzugeben, die aus dem Kartenkoordinatensystem ($\theta$, $\phi$) ableitbar sind.

**2.** Hilfe nach Anspruch 1, **dadurch gekennzeichnet,** daß die Verarbeitungseinrichtung so betrieben werden kann, daß sie die Entfernung und die Peilung der aktuellen Position in bezug auf die gespeicherte Position aus dem ersten und dem zweiten kartengestützten Signal berechnet und/oder umgekehrt, wobei die Anzeigeeinrichtung (50, 60) so angeordnet ist, daß sie die Entfernung und die Peilung anzeigt.

**3.** Hilfe nach Anspruch 1, die ferner eine Richtungsanzeigeeinrichtung (30 - 36) aufweist, die auf das zweite und erste kartengestützte Signal anspricht, um die Richtung der aktuellen Position zur vorgegebenen Position, wie sie dem ersten Signal entspricht, anzuzeigen, wobei die Anzeige der erforderlichen Richtung im wesentlichen sofort erfolgt und sie wiederholt aktualisiert wird.

**4.** Hilfe nach einem der Ansprüche 1 oder 3, bei der die Anzeige mit Anzeigeeinrichtungen versehen ist, die in zwei Richtungen rechtwinklig zueinander angeordnet sind.

**5.** Hilfe nach Anspruch 1, bei der die Verarbeitungseinrichtung so betrieben werden kann, daß sie die Entfernungen der aktuellen Position auf einem abseits von einem Kurs von einer gespeicherten Position zur nächsten aus dem zweiten kartengestützten Signal und aus zwei abgespeicherten ersten kartengestützten Signalen berechnet, wobei die Anzeigeeinrichtung eine Einrichtung (50, 60) zum Anzeigen der Entfernungen auf und abseits des Kurses anzeigt.

**6.** Hilfe nach einem der vorstehenden Ansprüche, die ferner eine Einrichtung (54, 56, 58, 44 REF) aufweist, um das Kartenkoordinatensystems auf das Erdoberflächen-Koordinatensystem abhängig von den Positionen ($x_n$, $x_n$) mindestens zweier Punkte auf der Erdoberfläche und die Koordinaten $\theta_n$, $\phi_n$ dieser Positionen ausgedrückt durch das Kartenkoordinatensystem zu beziehen, wobei die Umwandlungseinrichtung auf die Bezugsherstellungseinrichtung anspricht, um die Umwandlung zu bewirken.

**7.** Hilfe nach Anspruch 6, bei der die Bezugsherstellungseinrichtung eine Einrichtung zum manuellen Eingeben der Koordinaten der Positionen, ausgedrückt durch das Kartenkoordinatensystem, aufweist.

**8.** Hilfe nach Anspruch 6, mit weiterhin einer Einrichtung (56, 58) zum Speichern der Koordinaten von auf einer jeweiligen Karte gekennzeichneten Bezugspunkten für jede von mehreren Karten, einer Einrichtung zum Abrufen der abgespeicherten Koordinaten für eine ausgewählte Karte und einer Einrichtung zum Wiederherstellen eines Bezugs für die ausgewählte Karte, gestützt auf die abgerufenen Koordinaten und die Positionen der markierten Bezugspunkte auf der Kartenauflagefläche.

**9.** Hilfe nach Anspruch 6, zur Verwendung mit einer Karte mit angezeichneten Bezugspunkten und kodierter Information für die Koordinaten der angezeichneten Bezugspunkte, weiterhin mit einer Einrichtung zum Lesen der kodierten Information.

**10.** Hilfe nach einem der vorstehenden Ansprüche, ferner mit einer Einrichtung (46, 50) zum Anzeigen der aktuellen Kursorposition.

**11.** Hilfe nach einem der vorstehenden Ansprüche, ferner mit einer Einrichtung (48, 50, 60) zum Anzeigen der oder jeder gespeicherten Position.

**12.** Hilfe nach einem der vorstehenden Ansprüche, ferner mit einer Einrichtung (44) zum Eingeben von Daten über die Kursorvorrichtung von Hand, wobei die einzugebenden Daten vor der Eingabe, gestützt auf eine Bewegung der Kursorvorrichtung (16) in bezug auf die Kartenauflagefläche, variabel sind.

**13.** Hilfe nach einem der vorstehenden Ansprüche, bei der die Anzeigeeinrichtung so angeordnet ist, daß sie eine Anzeige auf der Kursorvorrichtung (16) wiedergibt.

**14.** Hilfe nach einem der vorstehenden Ansprüche, ferner mit einer Einrichtung (68) zum Übertragen des zweiten kartengestützten Positionssignals an ein externes Gerät.

**15.** Hilfe nach einem der vorstehenden Ansprüche, ferner mit einer Daten-Handeingabeeinrichtung (44), um eine Position, ausgedrückt durch das Kartenkoordinatensystem, einzugeben.

**16.** Hilfe nach einem der vorstehenden Ansprüche, ferner mit einer Einrichtung (68) zum Empfangen eines Eingangsdatensignals, das eine Position, ausgedrückt durch das Kartenkoordinatensystem, anzeigt, und zum Speichern des Eingangssignals für weitere Verarbeitung durch die Verarbeitungseinrichtung.

**17.** Hilfe nach einem der vorstehenden Ansprüche, ferner mit einer Takteinrichtung (67) und einer Einrichtung, die auf die Takteinrichtung, auf Geschwindigkeits- und Kurssignale und auf ein festgelegtes Positionssignal anspricht, um eine aktualisierte Position zu bestimmen und anzuzeigen.

**18.** Hilfe nach Anspruch 17, ferner mit einer Daten-Handeingabeeinrichtung zum Eingeben von Geschwindigkeit und Kurs.

**19.** Hilfe nach Anspruch 17 oder Anspruch 18, ferner mit einer Eingabeeinrichtung (68) zum Empfangen eines Signals, das Geschwindigkeit und Kurs anzeigt.

**20.** Hilfe nach einem der Ansprüche 17 bis 19, ferner mit einer Daten-Handeingabeeinrichtung zum Eingaben von Korrekturen für Geschwindigkeit und Kurs, wobei die aktualisierte Position die Korrekturen berücksichtigt.

**21.** Hilfe nach einem der Ansprüche 12, 15, 18 oder 20, bei der die Dateneingabeeinrichtung an oder in der Nähe der Kursorvorrichtung (16) angebracht ist.

**22.** Hilfe nach Anspruch 2, ferner mit einer Einrichtung (56, 58) zum Speichern eines Peilungsversatzes, wobei die Peilungsanzeigeeinrichtung die Summe oder die Differenz zwischen der bestimmten Peilung und dem Versatz anzeigt.

## Revendications

**1.** Un dispositif d'aide à la navigation comprenant :

une surface (10) apte à comporter une carte ; un moyen (58, 54) destiné à mémoriser, un premier signai de carte, représentatif d'une position prédéterminée sur une carte située sur ladite surface, en termes correspondant, au système de coordonnées ($\theta,\phi$) de cette carte ;

un curseur (16) qui peut être déplacé par un utilisateur sur la carte placée sur la surface (10) ;

un moyen (10, 64, 66) permettant de fournir un signal indicatif de la position actuelle du curseur (16) en termes correspondant au système de coordonnées (x, y) de la surface (10) ;

un moyen (54-58) de conversion du signal de position réelle du curseur en un deuxième signal de carte, indicatif de la position du curseur (16) en termes correspondant au système de coordonnées ($\theta,\phi$) de la carte ; et

un moyen (54-58) de traitement desdits premier et deuxième signaux ;

caractérisé en ce que ledit moyen de mémorisation (58, 54) est agencé pour mémoriser une série desdits premiers signaux de carte indicative d'une série de positions prédéterminées ;

en ce que ledit moyen de mémorisation (58, 54) comprend un moyen sensible à une instruction d'utilisateur pour repérer la position du curseur et fournir un premier signal de carte à mémoriser de façon à permettre auxdites positions prédéterminées d'être définies par le curseur (16) ;

en ce que le moyen de traitement est apte à exécuter une série de différents calculs de navigation en fonction dudit deuxième et d'au moins l'un desdits premiers signaux de carte ;

et en ce qu'un moyen d'affichage est prévu pour fournir une sortie visible des résultats dudit calcul, en termes d'unités dérivables du système de coordonnées de la carte ($\theta,\phi$).

**2.** Un dispositif d'aide à la navigation selon la revendication 1, dans lequel le moyen de traitement peut agir pour calculer, à partir du premier et du deuxième signaux de carte, la distance et le relèvement de la position réelle à partir de la position mémorisée et ou vice-versa, le moyen d'affichage (50, 60) étant agencé pour afficher la distance et le relèvement.

**3.** Un dispositif d'aide à la navigation selon la revendication 1, comprenant en outre un moyen indicateur (30-36) de direction sensible aux deuxième et premier signaux de carte pour indiquer une direction depuis ladite position réelle vers la position prédéterminée correspondant audit premier signal, dans lequel l'indication de la direction nécessaire est fournie de manière sensiblement instantanée et est mise à jour de façon répétée.

**4.** Un dispositif d'aide à la navigation selon l'une des revendications 1 ou 3, dans lequel l'indication est fournie par des indicateurs disposés dans deux directions formant un angle droit entre elles.

**5.** Un dispositif d'aide à la navigation selon la revendication 1, dans lequel le moyen de traitement peut agir pour calculer, à partir du deuxième signal de carte et à partir de deux premiers signaux de carte, les distances entre la position réelle le long d'une route allant d'une position à l'autre et au large de cette route, le moyen d'affichage comprenant un moyen (50, 60) pour afficher les distances le long de la route et au large de celle-ci.

**6.** Un dispositif d'aide à la navigation selon l'une quelconque des revendications précédentes, comprenant en outre un moyen (54, 56, 58, 44) pour référencer le système de coordonnées de la carte par rapport au système de coordonnées de la surface en fonction des positions($x_n$, x) d'au moins deux points de la surface et des coordonnées ($\theta_n,\phi_n$) de ces positions en termes correspondant au système de coordonnées de la carte, le moyen de conversion étant sensible au moyen de référence pour fournir la conversion.

**7.** Un dispositif d'aide à la navigation selon la revendication 6, dans lequel le moyen pour référencer inclut un moyen d'entrée manuelle des coordonnées desdites positions en termes correspondant au système de coordonnées de la carte.

**8.** Un dispositif d'aide à la navigation selon la revendication 6, comprenant en outre un moyen (56, 58) de mémorisation, pour chacune des cartes d'une série, des coordonnées de points de référence repérés sur les cartes respectives, un moyen de saisie des coordonnées mémorisées pour l'une des cartes choisie, et un moyen prévu pour référencer à nouveau la carte choisie en fonction des coordonnées saisies et des positions des points de référence repérés sur la surface à carte (10).

**9.** Un dispositif d'aide à la navigation selon la revendication 6, à utiliser avec une carte comprenant des points de référence repérés et une information codée des coordonnées des points de référence repérés, comprenant en outre un moyen de lecture de l'information codée.

**10.** Un dispositif d'aide à la navigation selon une quelconque des revendications précédentes, comprenant en outre un moyen (46, 50) d'affichage de la position réelle du curseur.

**11.** Un dispositif d'aide à la navigation selon une quelconque des revendications précédentes, comprenant en outre un moyen (48, 50, 60) d'affichage de la position mémorisée ou de chacune d'elles.

**12.** Un dispositif d'aide à la navigation selon une quelconque des revendications précédentes, comprenant en outre un moyen (44) d'entrée manuelle de données à l'aide du curseur ; la donnée à entrer étant variable, avant l'entrée, en fonction du mouvement du curseur (16) par rapport à la surface à carte 10.

**13.** Un dispositif d'aide à la navigation selon une quelconque des revendications précédentes, dans laquelle le moyen d'affichage est agencé pour afficher une indication sur le curseur (16) ;

**14.** Un dispositif d'aide à la navigation selon une quelconque des revendications précédentes, comprenant en outre un moyen (68) de transmission, vers un appareil extérieur, du deuxième signal de position de carte.

**15.** Un dispositif d'aide à la navigation selon une quelconque des revendications précédentes, comprenant en outre un moyen (44) d'entrée manuelle de données pour entrer une position en termes correspondant au système de coordonnées de la carte.

**16.** Un dispositif d'aide à la navigation selon une quelconque des revendications précédentes, comprenant en outre un moyen (68) prévu pour recevoir un signal de données d'entrée, représentant une position en termes correspondant au système de coordonnées de la carte, et mémoriser le signal entré en vue d'un traitement ultérieur par les moyens de traitement.

**17.** Un dispositif d'aide à la navigation selon une quelconque des revendications précédentes, incluant en outre un moyen d'horloge (67) et un moyen sensible au moyen d'horloge, à des signaux de vitesse et de route et à un signal de position définie, afin de déterminer et d'afficher une position mise à jour.

**18.** Un dispositif d'aide à la navigation selon la revendication 17, comprenant en outre un moyen d'entrée manuelle de données, pour entrer la vitesse et la route.

**19.** Un dispositif d'aide à la navigation selon l'une des revendications 17 ou 18 et comprenant un moyen d'entrée (68) pour recevoir des signaux indicatifs de la vitesse et de la route.

**20.** Un dispositif d'aide à la navigation selon les revendications 17 à 19, comprenant en outre un moyen manuel d'entrée de données pour entrer des corrections concernant la vitesse et la route, la position mise à jour prenant en compte ces corrections.

**21.** Un dispositif d'aide à la navigation selon l'une quelconque des revendications 12, 15, 18, et 20, dans lequel le moyen d'entrée de données est prévu sur le curseur 16 ou au moyen de celui-ci.

**22.** Un dispositif d'aide à la navigation selon la revendication 2, comprenant en outre un moyen (56, 58) prévu pour mémoriser un décalage de relèvement, le moyen d'affichage de relèvement affichant la somme ou la différence du relèvement déterminé et du décalage.

Fig.1.

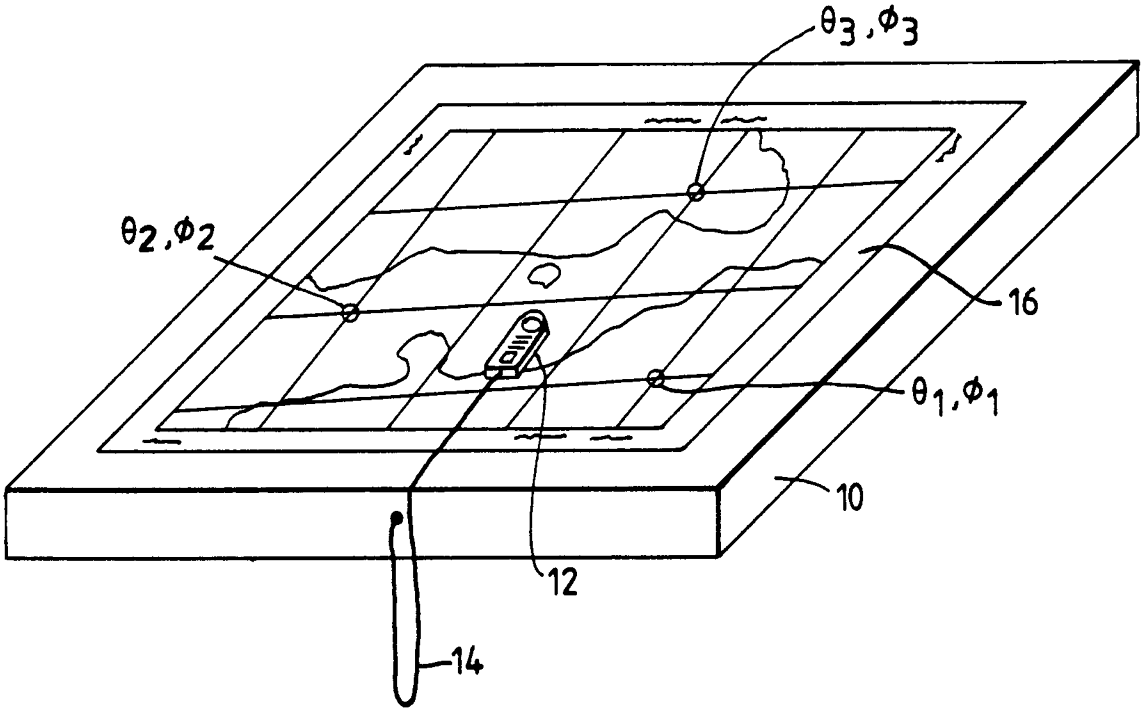

Fig.2.

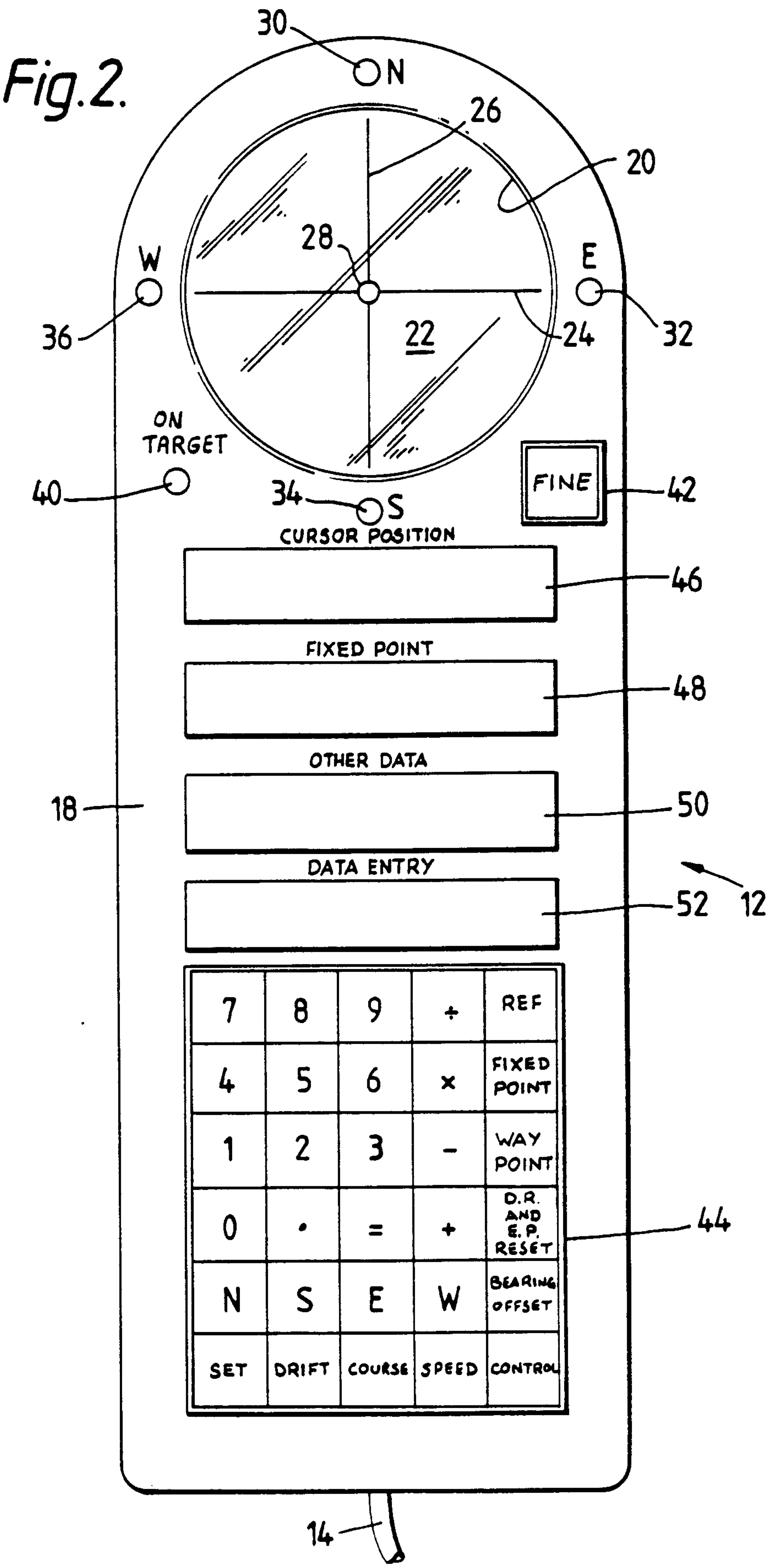
30
N
26
20
W
E
28
36
22
24
32
ON TARGET
40
34
S
FINE
42
CURSOR POSITION
46
FIXED POINT
48
OTHER DATA
18
50
DATA ENTRY
52
12
7
8
9
÷
REF
4
5
6
×
FIXED POINT
1
2
3
-
WAY POINT
0
•
=
+
D.R. AND E.P. RESET
44
N
S
E
W
BEARING OFFSET
SET
DRIFT
COURSE
SPEED
CONTROL
14

Fig.3.

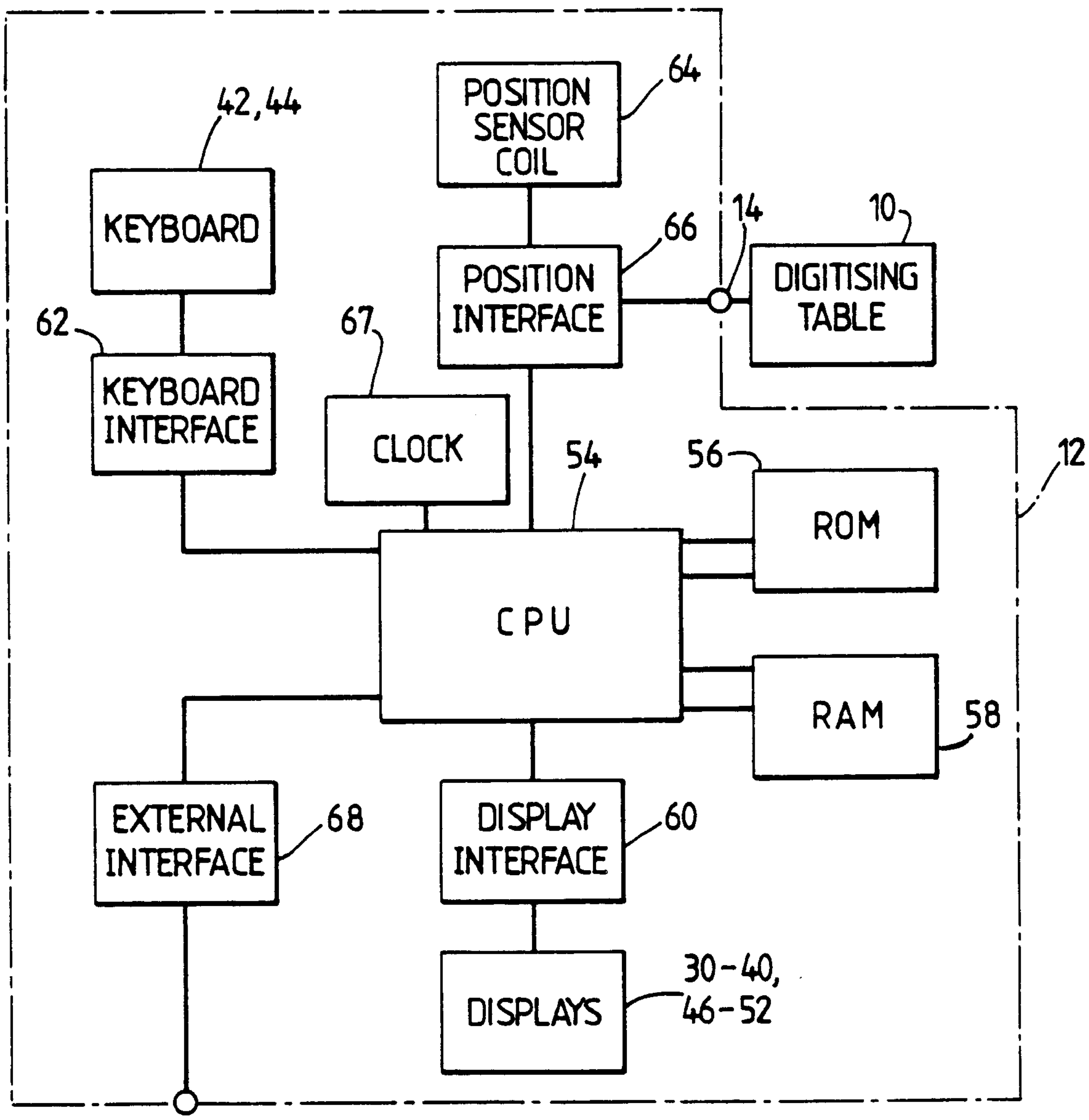
POSITION
SENSOR
COIL
64
42,44
KEYBOARD
POSITION
INTERFACE
66
14
10
DIGITISING
TABLE
62
KEYBOARD
INTERFACE
67
CLOCK
54
56
ROM
12
CPU
RAM
58
EXTERNAL
INTERFACE
68
DISPLAY
INTERFACE
60
DISPLAYS
30-40,
46-52

Fig.4.

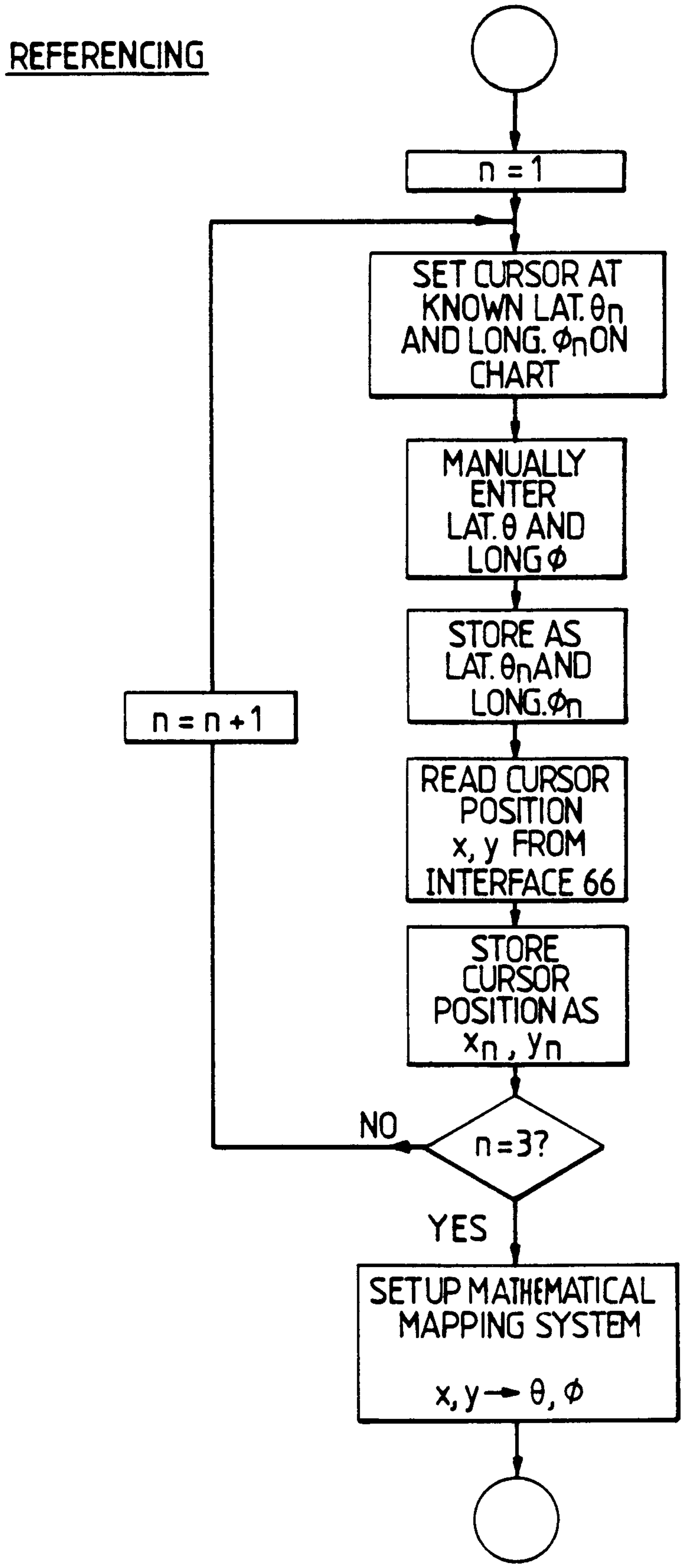
REFERENCING
n = 1
SET CURSOR AT KNOWN LAT. θn AND LONG. φn ON CHART
MANUALLY ENTER LAT. θ AND LONG φ
STORE AS LAT. θn AND LONG. φn
READ CURSOR POSITION x, y FROM INTERFACE 66
STORE CURSOR POSITION AS xn , yn
n = 3?
NO
n = n + 1
YES
SETUP MATHEMATICAL MAPPING SYSTEM
x, y → θ, φ

Fig.5.

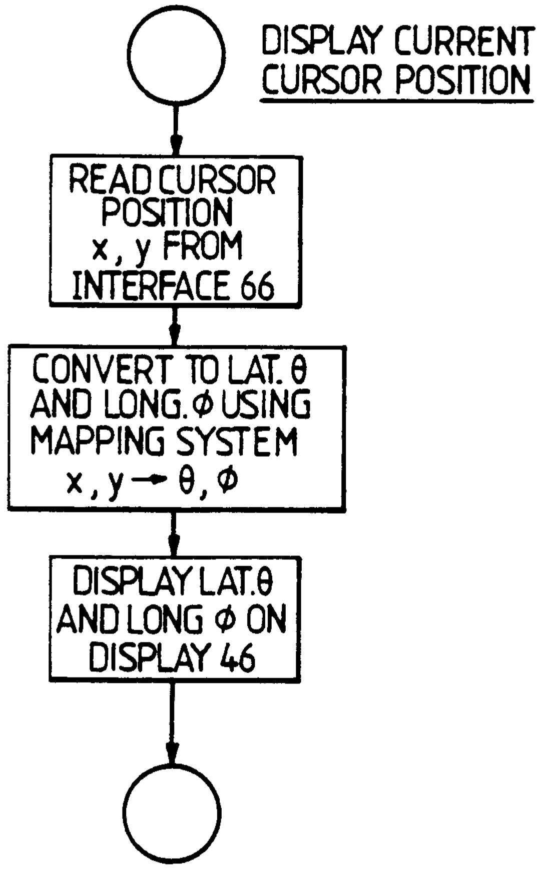
DISPLAY CURRENT CURSOR POSITION
READ CURSOR POSITION x, y FROM INTERFACE 66
CONVERT TO LAT. θ AND LONG. Φ USING MAPPING SYSTEM x, y → θ, Φ
DISPLAY LAT. θ AND LONG Φ ON DISPLAY 46

Fig.7.

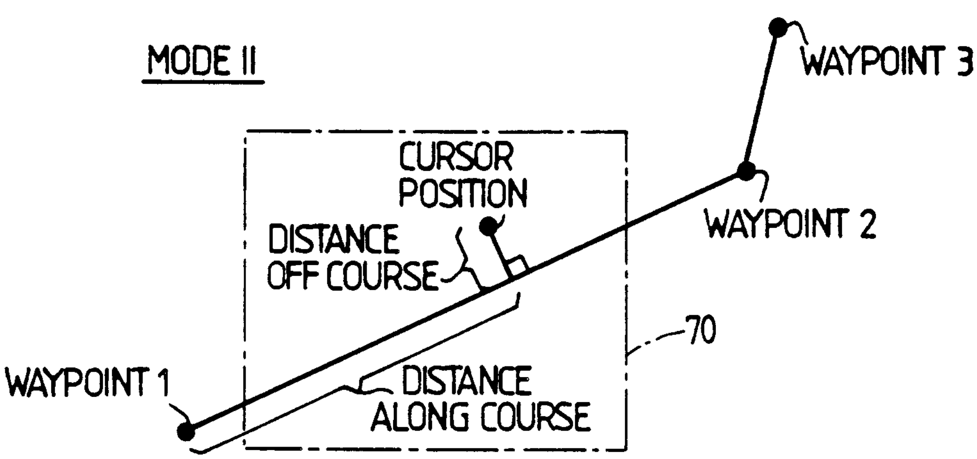
MODE II
WAYPOINT 3
CURSOR POSITION
DISTANCE OFF COURSE
WAYPOINT 2
70
WAYPOINT 1
DISTANCE ALONG COURSE

MOVING TO FIXED POINT

*Fig.6.*